# EUROPEAN PATENT SPECIFICATION

(11) **EP 0 626 348 B1**
(45) Date of publication and mention of the grant of the patent: **03.02.1999**
(21) Application number: 94202217.9
(22) Date of filing: 03.04.1990
(51) Int. Cl.: C02F 5/12, E21B 37/06, C23G 1/14

(54) **Method of decontaminating natural gas processing equipment**
Verfahren zur Dekontaminierung von Erdgas-Behandlungsvorrichtung
Méthode pour la décontamination des appareils de traitement du gaz naturel

(30) Priority: 03.04.1989 US 332147; 22.06.1989 US 369897; 03.11.1989 US 431114; 26.02.1990 US 484970; 09.03.1990 US 490886; 14.03.1990 US 493180
(43) Date of publication of application: 30.11.1994
(62) Divisional of application: 90905855.4
(73) Proprietor: MOBIL OIL CORPORATION, Fairfax, Virginia 22037-0001 (US)
(72) Inventor: Morris, Richard Leo, Duncanville, Texas 75116 (US); Paul, James Mark, DeSoto, Texas 75115 (US); Wilson, Peggy Mayfield, Cedar Hill, Texas 75104 (US)
(74) Representative: Jones, Helen Marjorie Meredith

(56) References cited:
- US-A- 2 877 848
- US-A- 3 625 761
- US-A- 3 684 720
- US-A- 4 708 805
- DATABASE WPI Section Ch, Week 8835, Derwent Publications Ltd., London, GB; Class D25, AN 88-245822 & JP-A-63 178 199 (TEIKOKU CHEM ET AL.) 22 July 1988

## Description

This invention relates to a method of decontaminating natural gas processing equipment. Natural gas is a major and attractive energy source in the United States and other countries which is distributed on a wide scale by means of pipelines to the ultimate users. The composition of natural gas at the wellhead varies widely from field to field and many components may need to be removed by processing before delivery to the pipeline, as noted in Encyclopedia of Chemical Technology, Kirk-Othmer, Third Edition, Vol. 1, pp. 630-652, John Wiley & Sons, New York, 1978. Condensate must be removed from wet gas, both to eliminate the possibility of condensation in the pipeline itself and to separate these components as another marketable product. Water vapor must also be removed to preclude the formation of gas hydrate and hydrogen sulfide is removed because of its poisonous and corrosive characteristics. Other components such as carbon dioxide and helium may also require removal if they are present.

Regardless of the specific processing sequence used to condition the gas for pipelining, it is normally passed through a number of items of process equipment prior to removal of the water which generally is present in all wellhead gas. Conventionally, the gas will pass through filters to remove entrained solid contaminants as well as compressors and other items of process equipment employed in the purification train. One problem which is encountered with these items of equipment which precede the water removal is that mineral species and other contaminants from the producing formations may be dissolved in or entrained with the water and may contaminate the equipment with which it comes into contact. Among the contaminants of this kind are dissolved salts including, especially, mineral species of low solubility which may deposit as scale on the filters and other surface equipment. Among the minerals of this kind which cause a particular problem are the sulfates of the alkaline earth metals, including, in particular, calcium, strontium and barium.

As these reaction products or mineral species precipitate on the surfaces of the water-carrying or water-containing system, they form adherent deposits or scale. Scale may prevent effective heat transfer, interfere with fluid flow, facilitate corrosive processes, or harbor bacteria. Scale is an expensive problem in many industrial water systems, in production systems for oil and gas, in pulp and paper mill systems, and in other systems, causing delays and shutdowns for cleaning and removal.

Another problem associated with the formation of barium and strontium sulfate scales is that radium, another member of the alkaline earth group of metals, tends to be deposited at the same time in the form of an insoluble sulfate so that the equipment becomes radioactive, and may eventually become unusable for safety reasons alone. At present a considerable amount of oilfield tubular goods are in this condition and cannot be readily restored to usable condition because of the difficulty of removing the radioactive scale. The principal isotopes of radium which have been identified in these scale deposits are radium-226 and radium-228, with half-lives of 1600 years and about 5.8 years, respectively, so that there is a considerable potential hazard if they are allowed to remain on the equipment. Radioisotopes of metals such as thallium and thorium e.g. thallium-208, thorium-232 and other radioactive isotopes - frequently formed by the decay of uranium - may also be deposited with the radium with the same result. This problem is encountered with gas processing equipment where the filters and dehydration media, including screens, sorbent beds and media e.g. silica, charcoal or alumina may become quite radioactive with extended use. Since these radioactive elements are embedded in the scale which itself can be removed only with difficulty, the decontamination of the equipment and material is a substantial problem.

The incidence of barium sulfate scale is worldwide, and it occurs principally in systems handling subsurface waters. Because of this, the barium sulfate scale problem is of particular concern to the petroleum industry as water is generally produced with petroleum and as time goes on, more petroleum is produced by the waterflooding method of secondary recovery, implying even greater volumes of produced water. The scale may occur in many different places, including production tubing, well bore perforations, the area near the well bore, gathering lines, meters, valves and in other production equipment. Barium sulfate scale may also form within subterranean formations such as in disposal wells. Scales and deposits can be formed to such an extent that the permeability of the formation is impaired resulting in lower flow rates, higher pump pressures, and ultimately abandonment of the well.

Barium sulfate scale is particularly troublesome when sulphate-rich seawater is used as an injection fluid in oil wells whose formation water is rich in barium ions. This particular aspect of the barium sulfate scale problem is severe in some U.S. oil fields as well as some older North Sea oil fields. Scaling of this nature is also expected to occur during advanced production stages in other North Sea fields particularly after seawater breakthrough has taken place.

Various proposals have been made in the past for the removal of barium sulfate scales using chemical scale removal compositions. Examples of such scale removal techniques are to be found in US-A-2,877,848; US-A-3,660,287; US-A-4,708,805; US-A-4,190,462; US-A-4,215,000 and US-A-4,288,333. The proposals set out in these dislosures represent, however, only partial or unsatisfactory solutions to the scale removal problem.

EP-A-418374 discloses highly effective chemical scale removal compositions which may be used for removing alkaline earth sulfate scales from oil field equipment including tubular goods such as pipe, casing, and wellhead equipment such as meters, valves and above-ground piping. Reference is made to this copending application for disclosure of these scale removal compositions and the methods by which they may be used.

In US-A-3684720 there is disclosed a method of removing scale from surfaces such as piping and other equipment by treating the scale with a solution containing a scale converting agent and a chelating agent.

According to one aspect of the present invention, there is provided a method of decontaminating natural gas processing equipment and media having an adherent deposit of water insoluble alkaline earth metal sulfates, which may include radioactive contaminants such as radium sulfate, which method of decontaminating natural gas processing equipment and media having an adherent mineral deposit of alkaline earth metal sulfates containing radioactive components, which method comprises:
(i) contacting the deposit with an aqueous composition, at a pH from 10 to 14, which comprises (a) a chelating agent and (b) a catalyst selected from the group consisting of oxalate mercaptoacetate, hydroxyacetate, aminoacetate, salicylate, thiosulphate, and nitrilotriacetate anions to convert the alkaline earth metal sulfates in the deposit to soluble form the deposit in the composition; and
(ii) removing the deposit from the equipment.

The preferred catalyst or synergist is the oxalate anion.

The chelant may, for example, be selected from aminocarboxylic acids, polyaminocarboxylic acids, polyamines, salts and mixtures thereof. The synergists are selected from the specified anions and mixtures thereof, which have an ionization constant of less than substantially 10⁻² (Ka <10⁻²).

The concentration of the chelant in the solvent should normally be at least 0.1M in order to achieve acceptable degree of scale removal. Chelant concentrations in excess of 1.0 M are usually not necessary and concentrations from about 0.3M up to about 0.6M will normally give good results; although higher concentrations of chelant may be used, there is generally no advantage to doing so because the efficiency of the chelant utilisation will be lower at excess chelant concentrations. This economic penalty is particularly notable in oilfield operations where large volumes of solvent may be used, especially in formation scale removal treatment.

In addition to the chelant, the present scale removal compositions contain a catalyst or synergist for the dissolution of the scale. As described in the copending application referred to above, the synergist is preferably the oxalate anion; a monocarboxylic anion selected from mercaptoacetate, hydroxyacetate or aminoacetate or salicylate; or thiosulfate; or nitriloacetate. Generally these anions are added as salts or the free acid, depending on the stability and availability of the chosen synergist. In either case, however, the relatively alkaline conditions under which the process is operated, will result in the acid, if used, being converted to the salt form. The potassium salts are preferred in view of their greater solubility and for this reason, the solvent should preferably be brought to the desired pH value with a potassium base, preferably potassium hydroxide.

The concentration of the catalyst or synergist in the aqueous solvent will be of a similar order to that of the chelant: thus, the amount of the synergist anion in the solvent should normally be at least 0.1M in order to achieve a perceptible increase in the efficiency of the scale removal, and concentrations from about 0.3M up to about 0.6M will give good results. Although higher concentrations of the synergist e.g. above 1.0 M may be used, there is generally no advantage to doing so because the efficiency of the process will be lower at excess catalyst concentrations. Again, this economic penalty is particularly notable in oilfield operations.

The scale removal is effected under alkaline conditions preferably at pH values of from about 10.0 to about 14.0, with optimum values being from about 11 to 13, preferably about 12. As noted above, the use of caustic potash is preferred to bring the composition to the desired pH since the potassium salts formed by its use are more soluble than the corresponding sodium salts.

The prefered solvents comprise about 0.1 to about 1.0 M of ethylenediaminetetraacetic acid (EDTA) or diethylenetriaminepentaacetic acid (DTPA), or salts of these acids, as a chelant. In addition, the chosen anionic catalyst or synergist is added to the aqueous solution in about 0.01 to about 1.0, preferably about 0.1M to 0.5 M, concentration. The pH of the solvent is then adjusted by the addition of a base, preferably potassium hydroxide, to the desired value, preferably to about pH 12. We have found that it is important to avoid the use of sodium cations when operating the invention, and instead, to use potassium or, alternatively, cesium as the cation of the scale-removing agent. Potassium is preferred for economy as well as availability. Thus, the normal course of making up the solvent will be to dissolve the chelant and the potassium salt of the selected synergist in the water to the desired concentration, after which a potassium base, usually potassium hydroxide is added to bring the pH to the desired value of about 12.

In the preferred scale removal compositions, a polyaminopolycarboxylic acid such as ethylenediaminetetraacetic acid (EDTA) or diethylenetriaminepentaacetic acid (DTPA) is used as the chelant, preferably in an amount of 0.1 to 1.0M as the chelant, typically about 0.5M giving good results. The preferred synergist or catalyst is the oxalate anion, as disclosed the copending application referred to above. The oxalate anion is preferably used in an amount of about 0.1 to 1.0M, preferably about 0.5M, with a pH of 10 to 14, preferably 11 to 13, and usually about 12. The desired pH value is obtained by the addition of a base, preferably a potassium base such as caustic potash, potassium hydroxide. If the chelant is added in the form of a salt, the preferred cations for the salt will be potassium since these have been found to give better solubility. An alternative synergist or catalyst is one of the specified monocarboxylic acid anions, also described in the copending application, preferably salicylate. These anions have also been found to give fast rates of sulfate scale dissolution and are able to take up a high level of sulfate scale into solution so that they represent a particularly favored method of decontaminating gas handling equipment and media. The thiosulfate or nitriloacetic acid synergists also described in the copending application may also be used, as described in that application. The amounts of the chelant and synergist used with the moncarboxylic acid and other synergists are comparable to the amounts used with the oxalate synergists and comparable solution pH values are also used, i.e chelant and synergist concentrations from 0.1 to 1.0M, usually about 0.5M, solution pH from 10 to 14, usually 11 to 13 and for best results, about 12.

The scale removal composition may be heated to a temperature between about 25°C to about 100°C. (or higher if superatmospheric pressure can be employed), in order to improve the dissolution of the insoluble scale species in the composition. Contact time between the equipment and the scale-removing composition is typically from about ten minutes to about 7 hours, depending on the thickness of the scale deposits and the temperature, with faster dissolution of the scale being obtained at the higher temperatures. After remaining in contact with the equipment for the desired time, the composition containing the dissolved scale may be drained off and, if desired, recovered for removal of the dissolved scale species.

In the treatment of the equipment and sorption media, the mineral deposits may be removed by washing with the selected solvent. The equipment may, if convenient, be washed with the solvent while still in place or, alternatively, removable items such as filters and minor pieces may be removed and washed with the solvent in a tank. Sorption media such as charcoal, alumina or silica, which are particulate in character, may be slurried with the solution after being unloaded from the sorption vessel or, alternatively, they may be treated in situ in the vessel if the loading of the medium and the mechanical features of the vessel permit this to be done. In either case, contact time will vary according to the thickness of the scale but at treatment temperatures of about 25° to 100° C., the duration of the treatment will normally be about 1 to 6 hours to reduce the radioactivity to acceptable levels. The solvent containing the dissolved scale components may then be treated to recover the dissolved radioactive materials for acceptable disposal methods, for example, by cation exchange onto a suitable cation-exchange resin to bring the radioactive components into solid form.

### Example

Samples were taken of a charcoal gas sorption medium, which had become contaminated with radium-226, thallium-208 and thorium 232. The samples contained these contaminants, accumulated over extended periods of time in gas processing, in amounts which precluded their disposal by normal methods. The activity was 24.9 pCi/g.(picocuries/gram.) for the radium component.

The charcoal samples were slurried with an aqueous solution of 0.5M DTPA (diethylenetriamine pentaacetic acid) and 0.5M oxalic acid brought to pH=12 by the addition of caustic potash (potassium hydroxide). The slurry was held at a temperature of 90-100°C for approximately four hours, after which the charcoal was filtered off and dried. After drying, the activity of the samples was found to be 0.3 pCi/g.(radium-226), low enough to permit disposal of the charcoal by conventional methods.

Another effective chelant is cyclohexanediaminetetraacetic acid (CDTA), which may be used with any of the synergists disclosed hereinabove. CDTA is particularly useful with the oxalate anion at a pH of substantially 13.

## Claims

1. A method of decontaminating natural gas processing equipment and media having an adherent mineral deposit of alkaline earth metal sulfates containing radioactive components, which method comprises:
(i) contacting the deposit with an aqueous composition, at a pH from 10 to 14, which comprises (a) a chelating agent and (b) a catalyst selected from the group consisting of oxalate, mercaptoacetate, hydroxyacetate, aminoacetate, salicylate, thiosulphate and nitrilotriacetate ions to convert the alkaline earth metal sulfates in the deposit to soluble form; and
(ii) removing the deposit from the equipment.

2. A method according to claim 1 in which the chelating agent (a) composition comprises a polyaminopolycarboxylic acid.

3. A method according to claim 1 or 2 in which the monocarboxylic anion is selected from hydrooxyacetate, mercaptoacetate, aminoacetate, and salicylate.

4. A method according to claim 1 or claim 2 in which the anion is selected from thiosulfate and nitriloacetate.

5. A method according to claim 1 or claim 2 in which the catalyst comprises oxalate anion in a concentration of 0.1M to 1.0M.

6. A method according to any preceding claim in which the pH of the composition is from 10 to 13.

7. A method according to any preceding claim in which the composition has been brought to the specified pH by the addition of a potassium base.

8. A method according to any preceding claim in which the chelating agent comprises DTPA in a concentration from 0.1M to 1.0M.

9. A method according to any preceding claim in which the deposit is contacted with the composition at a temperature from 25°C to 100°C.

10. A method according to any preceding claim in which the deposit contains radium.

11. A method according to claim 1 in which a particulate gas sorption medium is contacted with the composition.

12. Use of an aqueous composition as defined in any of claims 1 to 8 to decontaminate natural gas processing equipment and media having an adherent mineral deposit of alkaline earth metal sulfates containing radioactive components.

## Patentansprüche

1. Verfahren zum Dekontaminieren einer Erdgasbehandlungsvorrichtung und von Medien, an denen eine Mineralablagerung aus Erdalkalimetallsulfaten haftet, die radioaktive Komponenten enthalten, wobei das Verfahren folgende Schritte umfaßt:
(i) Inkontaktbringen der Ablagerung bei einem pH-Wert von 10 bis 14 mit einer wässerigen Zusammensetzung, die (a) einen Komplexbildner und (b) einen Katalysator aus der Gruppe der Oxalat-, Mercaptoacetat-, Hydroxyacetat-, Aminoacetat-, Salicylat-, Thiosulfat- und Nitrilotriacetationen enthält, um die Erdalkalimetallsulfate in der Ablagerung in eine lösliche Form zu überführen, und
(ii) Entfernen der Ablagerung von der Vorrichtung.

2. Verfahren nach Anspruch 1, worin der Komplexbildner (a) in der Zusammensetzung eine Polyaminopolycarbonsäure enthält.

3. Verfahren nach Anspruch 1 oder 2, worin das Monocarbonsäureanion aus Hydroxyacetat, Mercaptoacetat, Aminoacetat und Salicylat ausgewählt ist.

4. Verfahren nach Anspruch 1 oder 2, worin das Anion aus Thiosulfat und Nitriloacetat ausgewählt ist.

5. Verfahren nach Anspruch 1 oder 2, worin der Katalysator Oxalatanionen in einer Konzentration von 0,1 M bis 1,0 M enthält.

6. Verfahren nach einem der vorstehenden Ansprüche, worin der pH-Wert der Zusammensetzung 10 bis 13 beträgt.

7. Verfahren nach einem der vorstehenden Ansprüche, worin die Zusammensetzung durch Zugabe einer Kaliumbase auf den angegebenen pH-Wert eingestellt worden ist.

8. Verfahren nach einem der vorstehenden Ansprüche, worin der Komplexbildner DTPA in einer Konzentration von 0,1 M bis 1,0 M enthält.

9. Verfahren nach einem der vorstehenden Ansprüche, worin die Ablagerung bei einer Temperatur von 25 bis 100 °C mit der Zusammensetzung in Kontakt gebracht wird.

10. Verfahren nach einem der vorstehenden Ansprüche, worin die Ablagerung Radium enthält.

11. Verfahren nach Anspruch 1, worin ein aus Feststoffteilchen bestehendes Gassorptionsmedium mit der Zusammensetzung in Kontakt gebracht wird.

12. Verwendung einer wässerigen Zusammensetzung gemäß einem der Ansprüche 1 bis 8 zum Dekontaminieren einer Erdgasbehandlungsvorrichtung und von Medien, an denen eine Mineralablagerung aus Erdalkalimetallsulfaten haftet, die radioaktive Komponenten enthalten.

## Revendications

1. Un procédé de décontamination d'équipement et de moyens de traitement de gaz naturel ayant des dépôts minéraux adhérents de sulfates de métaux alcalino-terreux contenant des composants radioactifs, ladite méthode comprenant:
(i) la mise en contact des dépôts avec une composition aqueuse, à un pH de 10 à 14, qui comprend (a) un agent chélatant et (b) un catalyseur choisi dans le groupe consistant en ions oxalate, mercaptoacétate, hydroxyacétate, aminoacétate, salicylate, thiosulfate et nitrilotriacétate pour convertir les sulfates de métal alcalin des dépôts en une forme soluble, et
(ii) l'élimination des dépôts de l'équipement.

2. Un procédé selon la revendication 1, dans lequel la composition d'agent chélatant (a) comprend un acide polyaminopolycarboxylique.

3. Un procédé selon la revendication 1 ou 2, dans lequel l'anion monocarboxylique est choisi dans le groupe comprenant hydroxyacétate, mercaptoacétate, aminoacétate et salicylate.

4. Un procédé selon la revendication 1 ou 2, dans lequel l'anion est choisi parmi le thiosulfate et le nitriloacétate.

5. Un procédé selon la revendication 1 ou 2, dans lequel le catalyseur comprend l'anion oxalate à une concentration de 0,1 M à 1,0 M.

6. Un procédé selon l'une quelconque des revendications précédentes, dans lequel le pH de la composition est compris entre 10 et 13.

7. Un procédé selon l'une quelconque des revendications précédentes, dans lequel la composition a été amenée au pH spécifié par addition de base de potassium.

8. Un procédé selon l'une quelconque des revendications précédentes, dans lequel l'agent chélatant comprend le DTPA à une concentration de 0,1 M à 1,0 M.

9. Un procédé selon l'une quelconque des revendications précédentes, dans lequel le dépôt mis au contact de la composition a une température de 25°C à 100°C.

10. Un procédé selon l'une quelconque des revendications précédentes, dans lequel le dépôt contient du radium.

11. Un procédé selon la revendication 1, dans lequel on met en contact un milieu de sorption d'azote particulaire avec la composition.

12. L'utilisation d'une composition aqueuse selon l'une quelconque des revendications 1 à 8, pour décontaminer des équipements et moyens de traitement de gaz naturel ayant des dépôts minéraux adhérents de sulfates de métal alcalino-terreux contenant des composants radioactifs.
